# EUROPÄISCHE PATENTSCHRIFT

(11) **EP 1 681 203 B1**
(45) Veröffentlichungstag und Bekanntmachung des Hinweises auf die Patenterteilung: **30.09.2009**
(21) Anmeldenummer: 06000694.7
(22) Anmeldetag: 13.01.2006
(51) Int. Cl.: B60Q 1/40

(54) **Verfahren zum Rückstellen eines Fahrtrichtungsanzeigers eines Kraftfahrzeugs**
Method for cancelling a vehicle direction indicator
Procédé de désactivation d'un indicateur de changement de direction d'un véhicule

(30) Priorität: 15.01.2005 DE 102005002022
(43) Veröffentlichungstag der Anmeldung: 19.07.2006
(73) Patentinhaber: GM Global Technology Operations, Inc., Detroit, MI 48265-3000 (US)
(72) Erfinder: Bolduan, Dirk, 64390 Erzhausen (DE); Diehl, Peter G., 65421 Gross-Gerau (DE); Schieck, Rudi, 55232 Alzey (DE)
(74) Vertreter: Daniel, Ulrich W.P.

(56) Entgegenhaltungen:
- EP-A2- 0 779 181
- WO-A-98/26952
- DE-A1- 19 962 945

## Beschreibung

Die Erfindung bezieht sich auf ein Verfahren zum Rückstellen eines Fahrtrichtungsanzeigers eines Kraftfahrzeugs mit einem System zur elektrischen Lenkkraftunterstützung, wobei ein Steuersignal der elektrischen Lenkkraftunterstützung zum Rückstellen des Fahrtrichtungsanzeigers verwendet wird.

Die EP 0 779 181 A2 beschreibt ein Verfahren zum Rückstellen eines Fahrtrichtungsanzeigers eines Kraftfahrzeugs mit einem System zur elektrischen Lenkkraftunterstützung, wobei ein Steuersignal der elektrischen Lenkkraftunterstützung zum Rückstellen des Fahrtrichtungsanzeigers verwendet wird. Bei dem Signal handelt es sich um die Position eines Elektromotors der Lenkkraftunterstützung, die mittels eines Winkelaufnehmers ermittelt wird.

Im Weiteren offenbart die DE 199 62 945 A1 eine Anordnung zur Betätigung einer Fahrtrichtungs-Anzeigeeinheit eines Kraftfahrzeuges, dessen fahrerseitig betätigbare Lenkhandhabe und Vorderräder voneinander entkoppelbar sind, wobei fahrzustandsabhängige Eingangssignale an eine Entscheidungslogik gesendet sind und die Anzeigeeinheit mittels der Entscheidungslogik betätigt, vorzugsweise aus ihrer Anzeigestellung in ihre Ruhestellung überführt wird. Die Rückstellung der Anzeigeeinheit erfolgt in Abhängigkeit von der Stellung der gelenkten Vorderräder, die z. B. von einem Radwinkelsensor oder über die Wegsensoren oder über Radrehzahlsensoren zur Ermittlung der Geschwindigkeiten oder Differenzgeschwindigkeit der Vorderräder ermittelt werden kann.

Zur Anzeige einer Fahrtrichtungsänderung, beispielsweise an einer Kreuzung, sowie zur Anzeige eines Fahrspurwechsels auf einer mehrspurigen Fahrbahn ist es erforderlich, alle Kraftfahrzeuge mit Fahrtrichtungsanzeigern auszurüsten, die in der Regel im Bereich der Ecken sowie seitlich und/oder an Gehäusen der Außenspiegel des Kraftfahrzeugs angeordnet sind, um den vorausfahrenden und nachfolgenden sowie entgegenkommenden Verkehrsteilnehmern die Absicht eines Fahrers des Kraftfahrzeugs mitzuteilen. Üblicherweise umfassen die Fahrtrichtungsanzeiger Leuchtmittel, wie Glüh- oder Halogenlampen, mit einem orange eingefärbten Scheinwerferglas oder sie weisen orange leuchtende LEDs auf. Die Fahrtrichtungsanzeiger werden zur besseren Erkennung getaktet betrieben.

Zur Betätigung der Fahrtrichtungsanzeiger, kurz auch Blinker genannt, dient ein üblicherweise im Bereich eines Lenkrads eines Pkws oder Lkws angeordneter Lenkstockhebel, der zur Fahrtrichtungsanzeige "links" nach unten und zur Fahrtrichtungsanzeige "rechts" nach oben in einer im Wesentlichen vertikal ausgerichteten Ebene gedrückt wird. Der Lenkstockhebel kann derart ausgelegt sein, dass er für ein einmaliges Aufleuchten der Fahrtrichtungsanzeiger einer Seite nur einmal kurz nach oben oder unten angetippt werden kann oder, um ein länger andauerndes wiederholtes Aufleuchten des Blinksignals zu erhalten, mit einer Rastvorrichtung versehen sein, um ihn in der oberen oder unteren Stellung zu halten.

Ist das Kraftfahrzeug beispielsweise an einer Kreuzung in eine Seitenstraße eingebogen, kann das Rückstellen des Lenkstockhebels für den Fahrtrichtungsanzeiger vom Nutzer des Kraftfahrzeugs vergessen werden, wodurch andere Verkehrsteilnehmer irritiert werden. Um dies zu vermeiden, ist eine selbsttätige Rückstellung des Lenkstockhebels bekannt, die beispielsweise mechanisch mit einem Schalter erfolgt, der der Lenkspindel zugeordnet ist und beim Zurückdrehen des Lenkrads in seine Neutralstellung für eine nach der Kurvenfahrt erfolgende Geradeausfahrt bei Unterschreiten eines festgelegten Einschlagwinkels den Lenkstockhebel aus seiner eingerasteten Position in seine neutrale Stellung zurückverbringt. Derartige mechanische Schalter sind jedoch störanfällig und unterliegen einem Verschleiß.

Die DE 195 08 426 A1 offenbart ein Schaltgerät zum automatischen Abschalten eines Blinksignalgebers. Hierbei sind an einer Lenksäule des Kraftfahrzeugs drei Magnetelemente kreisförmig um die Lenksäule verteilt angeordnet sowie zwei zusätzliche Sensorelemente vorgesehen. Die Bewegung der sich mit der Lenksäule mitdrehenden Magnetelemente wird durch die Sensorelemente berührungslos und verschleißfrei erfasst und somit kann das Zurückdrehen des Lenkrads für Geradeausfahrt überwacht und dementsprechend ein Fahrtrichtungsanzeiger wieder ausgeschaltet werden. Dies ist insofern nachteilig, als mit den Magnetelementen unter Umständen unerwünschte elektromagnetische Felder im Bereich der Lenksäule erzeugt werden, die beispielsweise einen in der Mitte des Lenkrads angeordneten Airbag mit seinem Sensor beeinflussen können. Außerdem sind zwei zusätzliche Sensorelemente notwendig.

Die WO 97/26151 beschreibt eine Überschaltsicherung für Lenkstockschalter mit automatischer Rückstellung, mit der bei einer mechanisch ausgelösten Rückstellung des Lenkstockschalters in seine Neutralstellung vermieden wird, dass der mechanische Rücksteller zerstört wird, falls der Nutzer des Kraftfahrzeugs trotz dem sich in die neutrale Stellung zurückdrehenden Lenkrad den Lenkstockschalter weiterhin in seiner Blinkposition hält.

Des Weiteren ist es bekannt, dass vor allem höherwertige Kraftfahrzeuge über ein so genanntes ESP ("Elektronisches Stabilitäts Programm") verfügen, mit dem die Fahrsicherheit des Kraftfahrzeugs erhöht wird. Hierzu werden beispielsweise die aktuelle Geschwindigkeit sowie der Lenkradeinschlag erfasst, um u. a. durch selbsttätiges Gaswegnehmen oder gezieltes Bremsen an einem oder mehreren Rädern des Kraftfahrzeugs kritische Fahrsituationen zu vermeiden. Bei dem ESP werden die erforderlichen Daten von einem zentralen Steuergerät im Kraftfahrzeug ermittelt und beispielsweise die Bremsen entsprechend angesteuert. Zur Datenermittlung ist u. a. an der Lenksäule ein an sich beliebig ausgestalteter Drehwinkelsensor vorgesehen. Dabei ist es möglich, Signale dieses Drehwinkelsensors ebenfalls zum Rückstellen des Fahrtrichtungsanzeigers zu verwenden, sobald ein bestimmter Einschlagwinkel des Lenkrads wieder unterschritten wird.

Weiterhin verfügen viele Kraftfahrzeuge über ein System zur elektrischen Lenkkraftunterstützung, bei dem die von dem Lenker des Kraftfahrzeugs aufzubringende Kraft, um das Lenkrad im gewünschten Winkel zu drehen, mit Hilfe z. B. eines Elektromotors, der auf die Lenksäule einwirkt, verringert bzw. die Drehbewegung für den Nutzer erleichtert und unterstützt wird. Selbstverständlich wird das System zur Lenkkraftunterstützung von einem zentralen Steuergerät im Kraftfahrzeug angesteuert.
Als nachteilig ist anzusehen, dass zum Rückstellen des Fahrtrichtungsanzeigers in einem Kraftfahrzeug stets zusätzliche Sensoren notwendig sind, die zum einen einen erhöhten Montageaufwand erfordern und im Fall des Auftretens einer Störung falsche Signale zum Deaktivieren des Fahrtrichtungsanzeigers liefern können.

Es ist Aufgabe der Erfindung, ein Verfahren zum Rückstellen eines Fahrtrichtungsanzeigers eines Kraftfahrzeugs der eingangs genannten Art anzugeben, das störunanfällig und ohne zusätzlichen Aufwand durchführbar ist.

Erfindungsgemäß wird die Aufgabe durch die Merkmale der Ansprüche 1 und 2 gelöst. Vorteilhafte Ausgestaltungen sind in den Ansprüchen 3 und 4 angegeben.
Der Kerngedanke der Erfindung besteht darin, dass auf herkömmliche und zusätzlich anzubringende mechanische oder elektrische Sensoren zur Erfassung des Drehwinkels der Lenksäule bzw. des Lenkrads des Kraftfahrzeugs verzichtet wird und lediglich ein Steuersignal eines Systems zur elektrischen Lenkkraftunterstützung, das bereits im Kraftfahrzeug vorhanden ist, zur Rückstellung des Fahrtrichtungsanzeigers herangezogen wird. Hierbei kann es sich im Rahmen der Erfindung um an sich beliebige elektrische Systeme zur Lenkkraftunterstützung handeln, bevorzugt jedoch die im Folgenden beschriebenen.

Diesen Systemen ist gemeinsam, dass das Einschlagen des Lenkrades des Kraftfahrzeugs vom Nutzer entweder für einen Spurwechsel oder zum Abbiegen an einer Kreuzung vom System erfasst und die Lenkbewegung beispielsweise elektromotorisch unterstützt wird. Sobald für eine nachfolgende Geradeausfahrt vom Nutzer das Lenkrad wieder in seine Ausgangsstellung zurückgedreht wird, wird dies ebenfalls registriert und beispielsweise ein Elektromotor zum Rückstellen des Lenkrads entsprechend angesteuert. Das Steuersignal wird nunmehr dazu verwendet, auch den Fahrtrichtungsanzeiger, der vor dem Einschlagen des Lenkrads betätigt wurde, wieder in seine Neutralstellung zurückzuversetzen. Vorzugsweise ist diese Funktionalität in einem zentralen Steuergerät des Kraftfahrzeugs hard- und/oder softwaremäßig implementiert. Hierzu steht dieses Steuergerät über dem Fachmann für die Kraftfahrzeugtechnik bekannte Datenbus-Architekturen mit sämtlichen Komponenten und Sensoren des Kraftfahrzeugs in Verbindung, empfängt entsprechende Signale und steuert beispielsweise das System zur elektrischen Lenkkraftunterstützung an. Das Steuersignal zum zurücksetzen des Fahrtrichtungsanzeigers in seine Neutralstellung kann über eine diskrete Verdrahtung oder einen Fahrzeug-Bus übertragen werden.

Der Vorteil der Erfindung liegt darin, dass kein zusätzlicher Drehwinkelsensor vorgesehen sein muss, mit dem der Drehwinkel des Lenkrads überwacht wird, um beim Zurückdrehen des Lenkrads den Fahrtrichtungsanzeiger wieder zurückzustellen. Somit ist die Montage vereinfacht und das Verfahren kann störunanfälliger durchgeführt werden.

Erfindungsgemäß wird ein Steuersignal eines EPS-Systems ("Electrical Power Steering") verwendet. Bei einem derartigen EPS-System wird das vom Fahrer aufgebrachte Lenkdrehmoment zum Einschlagen des Lenkrads beispielsweise von einem Torsionsstab, der als Drehmomentsensor dient, erfasst und als Eingangssignal dem EPS-Steuergerät bzw. dem zentralen Steuergerät im Kraftfahrzeug zugeleitet. Eine Information bezüglich der Fahrtgeschwindigkeit wird beispielsweise von einem Wegstreckensensor oder einem Tachometer übermittelt. Das EPS-Steuergerät berechnet das in Abhängigkeit des Einschlagwinkels sowie der Fahrtgeschwindigkeit notwendige Drehmoment und dessen Wirkrichtung und sendet entsprechende Steuersignale an einen Elektromotor. Mit Hilfe von im Steuergerät abgelegten Kennfeldern wird vom Elektromotor ein Unterstützungsmoment zum Drehen der Lenksäule erzeugt. Dieses Unterstützungsmoment wird vorzugsweise durch ein Schneckengetriebe auf die Lenksäule übertragen, um das Lenkrad im gewünschten Winkel einzuschlagen.

Sobald der Fahrer nach Beendigung der Kurvenfahrt das Lenkrad wieder zurückdreht, wird dies von dem bereits vorhandenen Sensor des EPS-Systems erfasst und dementsprechend die Laufrichtung des zugehörigen Elektromotors umgedreht. Dies erfolgt durch eine Umkehrung der Stromflussrichtung durch den Elektromotor, wodurch sich dieser entgegengesetzt dreht. Das Umschalten der Stromflussrichtung wird einem zentralen Steuergerät zugeleitet, das darauf schließt, dass nunmehr wieder eine Geradeausfahrt erfolgt, da das Lenkrad in seine neutrale Stellung zurückgedreht wird. Dementsprechend wird der Fahrtrichtungsanzeiger deaktiviert.

Nach einer alternativen Ausgestaltung wird ein Steuersignal eines EHPS-Systems ("Electro Hydraulic Power Steering") verwendet, bei dem eine Lenkbewegung hydraulisch unterstützt wird. Dabei wird von einem Elektromotor eine Pumpe derart angesteuert, dass in dem zugehörigen hydraulischen System stets ein Druck p₀ herrscht. Sobald von einem Nutzer des Kraftfahrzeugs eine Lenkbewegung ausgeführt wird, wird die Drehbewegung der Lenksäule in das hydraulische System eingeleitet, beispielsweise indem sich ein Kolben in Abhängigkeit des Drehwinkels der Lenksäule im hydraulischen System verschiebt. Hierdurch wird der Druck im hydraulischen System entgegen der von der Hydraulikpumpe ausgeübten Kraft erhöht, so dass der zugehörige Elektromotor zum Antreiben der Pumpe eine größere Kraft aufwenden muss, um den Druck im hydraulischen System entgegen der Lenkbewegung konstant zu halten. Dies kann von einem Regelkreis eines entsprechend ausgelegten Steuergeräts erfasst und überwacht werden. Sobald ein Anstieg des Drucks im hydraulischen System festgestellt wird, wird der Elektromotor beispielsweise mit einer erhöhten Drehzahl betrieben, um seinerseits den Druck im hydraulischen System zu erhöhen und somit die Lenkbewegung in der gewünschten Drehrichtung zu unterstützen. Hierzu wird von dem hydraulischen System eine Kraft auf die Lenkung des Kraftfahrzeugs ausgeübt.

Sobald das Lenkrad wiederum zurückgedreht wird, erfolgt durch dieses Zurückdrehen erneut eine Änderung des Drucks im zugehörigen hydraulischen System, die ebenfalls über die Leistungsaufnahme bzw. die Drehzahl des Elektromotors erfasst werden kann. Sobald dies der Fall ist, beispielsweise wenn das Lenkrad aus einer eingeschlagenen Position wieder in die neutrale Stellung zurückgedreht wird, wird der Elektromotor wiederum in seinen ursprünglichen so genannten "Standby-Modus" geschaltet, in dem er beispielsweise nur mit seiner normalen Drehzahl betrieben wird. Dieses Umschalten kann ebenfalls von einem zentralen Steuergerät dazu verwendet werden, um die Fahrtrichtungsanzeiger wiederum zu deaktivieren.

Vorzugsweise wird eine von einem System zur elektrischen Lenkkraftunterstützung aufgebrachte Kraft, insbesondere nach ihrer Größe, zum Rückstellen des Fahrtrichtungsanzeigers herangezogen. Hierbei kann z. B. eine Verringerung der vom System aufzubringenden Kraft, die auf ein Zurückdrehen des Lenkrads hindeutet, vom Steuergerät dahingehend interpretiert werden, dass nunmehr wiederum eine Geradeausfahrt erfolgt und dementsprechend die Fahrtrichtungsanzeiger ausgeschaltet werden.

Ebenso ist es möglich, dass eine Zeitdauer der Lenkkraftunterstützung als Signal zum Rückstellen der Fahrtrichtungsanzeiger herangezogen wird. Beispielsweise kann beim Zurückdrehen eines Lenkrads, das vorher in einer voll eingeschlagenen Position war, das Deaktivieren der Fahrtrichtungsanzeiger erst nach einer vorzugsweise einstellbaren Zeitdauer, innerhalb derer wiederum vom System ein Zurückdrehen des Lenkrads unterstützt wurde, die Fahrtrichtungsanzeiger wieder deaktiviert werden. Somit werden nicht unmittelbar nach Beginn des Zurückdrehens des Lenkrads die Fahrtrichtungsanzeiger deaktiviert, sondern erst nach einer gewissen Zeitdauer, d. h. bis ein vorzugsweise einstellbarer Lenkeinschlagswinkel wiederum unterschritten wurde, um die Fahrtrichtungsanzeiger erst bei Beendigung der Kurvenfahrt wieder auszuschalten.

Es versteht sich, dass die vorstehend genannten Merkmale nicht nur in der jeweils angegebenen Kombination, sondern auch in anderen Kombinationen verwendbar sind. Der Rahmen der Erfindung ist nur durch die Ansprüche definiert.

## Patentansprüche

1. Verfahren zum Rückstellen eines Fahrtrichtungsanzeigers eines Kraftfahrzeugs mit einem System zur elektrischen Lenkkraftunterstützung, wobei ein Steuersignal der elektrischen Lenkkraftunterstützung zum Rückstellen des Fahrtrichtungsanzeigers verwendet wird, **dadurch gekennzeichnet, dass** als Steuersignal eine Änderung einer Stromflussrichtung durch einen Elektromotor eines Electrical-Power-Steering Systems (EPS) verwendet wird.

2. Verfahren nach dem Oberbegriff des Anspruchs 1, **dadurch gekennzeichnet, dass** als Steuersignal ein Zurückschalten der Drehzahl eines Elektromotors eines Electro-Hydraulic-Power-Steering Systems (EHPS) in einen "Standby-Modus" verwendet wird.

3. Verfahren nach Anspruch 1 oder 2, **dadurch gekennzeichnet, dass** eine vom System zur elektrischen Lenkkraftunterstützung aufzubringende Kraft berücksichtigt wird, insbesondere ihre Größe.

4. Verfahren nach einem der Ansprüche 1 bis 3, **dadurch gekennzeichnet, dass** eine Zeitdauer der vom System zur elektrischen Lenkkraftunterstützung aufzubringenden Kraft berücksichtigt wird.

## Claims

1. A method for cancelling a direction indicator of a motor vehicle, comprising a system for electric power-assisted steering, with a control signal of the electric power-assisted steering being used for cancelling the direction indicator, **characterized in that** a change in the direction of the current flow through an electric motor of an electric power-steering system (EPS) is used.

2. A method according to the preamble of claim 1,
**characterized in that** a switching back of the speed of an electric motor of an electric electro-hydraulic power-steering system (EHPS) to a standby mode is used as a control signal.

3. A method according to claim 1 or 2, **characterized in that** a force, especially its magnitude, to be applied by the system for electric power-assisted steering is considered.

4. A method according to one of the claims 1 to 3,
**characterized in that** a duration of the force is considered which is applied by the system for electric power-assisted steering.

## Revendications

1. Procédé pour réinitialiser un indicateur de direction d'un véhicule à moteur avec un système de direction assistée électrique, dans lequel un signal de commande de la direction assistée électrique est utilisé pour réinitialiser l'indicateur de direction, **caractérisé en ce que** le signal de commande utilisé est une variation d'un sens de circulation du courant à travers un moteur électrique d'un système de direction assistée électrique EPS.

2. Procédé selon le préambule de la revendication 1, **caractérisé en ce que** le signal de commande utilisé est une réinitialisation de la vitesse de rotation d'un moteur électrique d'un système de direction assistée électrohydraulique (EHPS) en mode d'attente.

3. Procédé selon la revendication 1 ou 2, **caractérisé en ce qu'**une force à exercer par le système de direction assistée électrique, et en particulier sa grandeur, est prise en compte.

4. Procédé selon l'une des revendications 1 à 3, **caractérisé en ce qu'**une durée de la force à exercer par le système de direction assistée électrique est prise en compte.
